# EUROPÄISCHE PATENTSCHRIFT

(11) **EP 1 387 532 B1**
(45) Veröffentlichungstag und Bekanntmachung des Hinweises auf die Patenterteilung: **04.05.2005**
(21) Anmeldenummer: 02017325.8
(22) Anmeldetag: 01.08.2002
(51) Int. Cl.: H04L 12/56

(54) **Optimiertes Verfahren zur Nachrichtenübertragung**
Optimised method of data transmission
Optimisation de la méthode de transmission des données

(43) Veröffentlichungstag der Anmeldung: 04.02.2004
(73) Patentinhaber: SIEMENS AKTIENGESELLSCHAFT, 80333 München (DE)
(72) Erfinder: Lohmann, Thomas, Dr., 81475 München (DE); Tuexen, Michael, Dr., 81479 München (DE)

(56) Entgegenhaltungen:
- WO-A-00/41365
- "RFC 2960 Stream Control Transmission Protocol" RFC, [Online] Oktober 2000 (2000-10), XP002228473 Gefunden im Internet: <URL:http://www.faqs.org/ftp/rfc/pdf/rfc29 60.txt.pdf> [gefunden am 2003-01-21]
- JUNGMAIER A ET AL: "SCTP - A MULTI-LINK END-TO-END PROTOCOL FOR IP-BASED NETWORKS" AEU INTERNATIONAL JOURNAL OF ELECTRONICS AND COMMUNICATIONS, GUSTAV FISHER VERLAG, JENA, DE, Bd. 55, Nr. 1, 1. Januar 2001 (2001-01-01), Seiten 46-54, XP001001959 ISSN: 1434-8411

## Beschreibung

Bei der Kommunikation über Verbindungen in Kommunikationsnetzen oder zwischen Geräten (z.B. Prozessoren) erfolgt der Informationsaustausch zwischen den jeweiligen Instanzen oft nachrichtenbasiert, d.h. zwischen den Instanzen werden Nachrichten ausgetauscht, die aus einer Anzahl von Informationseinheiten (z.B. Bytes) bestehen, wobei die Anzahl von Informationseinheiten, die in einer einzigen Nachricht enthalten sein können, eine untere (z.B. 1 Byte) und eine obere Grenze (z.B. 4096 Byte) aufweist.

Da die Informationsverarbeitung durch die Instanzen nur anhand kompletter Nachrichten sinnvoll erfolgen kann, erfolgt die Speicherverwaltung für Sender und/oder Empfänger in den meisten Fällen nachrichtenorientiert, d.h. es steht beispielsweise eine definierte Anzahl von Speicherplätzen (z.B. 10) zur Verfügung, die jeweils genau eine Nachricht, gleich welcher Länge, aufnehmen.

Demgegenüber erfolgt der Transport mittels eines Transportprotokolls, welches in vielen Fällen eine an der Anzahl der Informationseinheiten orientierte (z.B. eine byteorientierte) Flußkontrolle aufweist. Dies wird im folgenden der Verständlichkeit wegen mit dem Begriff "byteorientiert" abgekürzt, allerdings soll dies keine Beschränkung auf ein Byte als zugrundeliegende Informationseinheit darstellen, sondern vielmehr die vorliegende Erfindung anhand einer gebräuchlichen Informationseinheit beispielhaft verdeutlichen.

Byteorientierte Flußkontrolle bedeutet, daß eine Anzahl von Bytes vorgegeben wird, die durch das Transportprotokoll vom Sender zum Empfänger unquittiert übermittelt werden darf.

Ein Problem ergibt sich nunmehr daraus, daß aufgrund der verschiedenen möglichen Nachrichtenlängen zwischen der unteren und oberen Grenze Situationen auftreten können, in denen alle Speicherplätze für Nachrichten beim Empfänger belegt sind (beispielsweise mit kurzen Nachrichten), die byteorientierte Flußkontrolle jedoch das Versenden weiterer Bytes und damit Nachrichten zuläßt, wobei die Nachrichten beim Empfänger jedoch verworfen werden, da keine Speicherplätze mehr zur Verfügung stehen. Dieser Verwurf von Nachrichten wird in der Regel jedoch dem Sender nicht signalisiert, sondern beim Sender durch Ablauf eines Timers festgestellt. Dadurch verzögert sich die erneute Zustellung der entsprechenden Nachrichten jedoch um mindestens die Laufzeit dieses Timers, was letztlich einen Zeitverlust und zusätzliche Last auf der Verbindung bei der Nachrichtenübertragung bedeutet.

Eine bekannte Möglichkeit, den aus dem genannten Problem resultierenden Effekt für reale Systeme abzumildern, besteht darin, eine größere Anzahl von Speicherplätzen für Nachrichten beim Empfänger vorzusehen. Allerdings wird dadurch der Konflikt nicht behoben, sondern lediglich die Häufigkeit des Auftretens verringert.

Es ist eine Aufgabe der vorliegenden Erfindung, ein Verfahren anzugeben, durch welches die Nachteile des Standes der Technik vermieden werden.

Diese Aufgabe wird durch ein Verfahren zur Nachrichtenübertragung ausgehend vom Oberbegriff des Patentanspruchs 1 durch dessen kennzeichnende Merkmale und durch eine optimierte Protokollmaschine ausgehend vom Oberbegriff des Patentanspruchs 6 durch dessen kennzeichnende Merkmale gelöst.

Bevorzugte Ausführungsformen sind Gegenstand der abhängigen Ansprüche.

Gemäß der vorliegenden Erfindung wird ein Verfahren zur Nachrichtenübertragung zwischen einem Sender und einem Empfänger vorgesehen, wobei der Empfänger eine nachrichtenorientierte Speicherverwaltung aufweist und wobei ein Transportprotokoll zwischen Sender und Empfänger eine Flußkontrolle aufweist, die an der Anzahl von Informationseinheiten orientiert ist, wobei
- zunächst für den Sender zumindest einer der folgenden Parameter bestimmt wird: Parameter repräsentativ für das Vorhandensein der nachrichtenorientierten Speicherverwaltung beim Empfänger; Anzahl beim Empfänger vorhandener Speicherplätze für Nachrichten; Größe jeweils eines der beim Empfänger vorhandenen Speicherplätze für Nachrichten, ausgedrückt in Informationseinheiten,
- dem gemäß zeitgesteuert oder ereignisgesteuert vom Empfänger an den Sender die Anzahl der noch erlaubten Informationseinheiten übermittelt wird, wobei der Empfänger diese Anzahl anhand der Zahl empfangener Nachrichten oder noch freier Speicherplätze für Nachrichten ermittelt, und
- durch den Sender aus der übermittelten Anzahl noch erlaubter Informationseinheiten die Anzahl noch an den Empfänger übermittelbarer Nachrichten ermittelt wird.

Ferner wird eine Protokollmaschine oder Netzknoten oder Router mit einer Empfangsvorrichtung und mit einer Sendevorrichtung vorgesehen, wobei die Empfangsvorrichtung eine nachrichtenorientierte Speicherverwaltung aufweist und wobei ein von Sende- und Empfangsvorrichtung unterstütztes Transportprotokoll eine Flußkontrolle aufweist, die an der Anzahl von Informationseinheiten orientiert ist, und wobei:
- die Sendervorrichtung Mittel zum Ermitteln zumindest eines der folgenden Parameter aufweist: Parameter repräsentativ für das Vorhandensein der nachrichtenorientierten Speicherverwaltung bei einer Empfangsvorrichtung einer weiteren Protokollmaschine, die mit der Protokollmaschine verbunden ist; Anzahl der bei der Empfangsvorrichtung der weiteren Protokollmaschine vorhandenen Speicherplätze für Nachrichten; Größe jeweils eines der bei der Empfangsvorrichtung vorhandenen Speicherplätze für Nachrichten, ausgedrückt in Informationseinheiten,
- die Empfangsvorrichtung Mittel aufweist zum zeitgesteuerten oder ereignisgesteuerten Senden an eine Sendevorrichtung einer weiteren Protokollmaschine der Anzahl der noch erlaubten Informationseinheiten, wobei die Empfangsvorrichtung diese Anzahl anhand der Zahl empfangener Nachrichten oder noch freier Speicherplätze für Nachrichten ermittelt, und
- die Sendevorrichtung Mittel zum Ermitteln der Anzahl noch sendbarer Nachrichten aus einer von der Empfangsvorrichtung der weiteren Protokollmaschine empfangenen Anzahl erlaubter Informationseinheiten aufweist.

Ein wichtiger Vorteil der Erfindung besteht darin, daß unabhängig von der aktuellen Lastsituation, d.h. auch beim Vorliegen einer Lastsituation mit vielen kurzen Nachrichten, keine Nachrichten zunächst an den Empfänger übertragen und dort verworfen werden, sondern daß Nachrichten, die aufgrund fehlender Speicherpositionen beim Empfänger nicht aufgenommen werden können, zurückgehalten werden.

Da keine Nachrichten verworfen werden müssen, tritt auch die Verzögerung nicht auf, die entsteht, wenn verworfene Nachrichten timergesteuert bei ausbleibender Bestätigung erneut übertragen werden. Außerdem wird unnötige Netzlast dadurch vermieden, daß die Nachrichten zurückgehalten werden.

Die Erfindung hat den Vorteil, daß eine nachrichtenorientierte Speicherverwaltung und ein Transportprotokoll mit einer an der Anzahl von Informationseinheiten orientierten Flußkontrolle optimal aufeinander angepaßt sind. Zum einen wird vermieden, daß die Anzahl maximal zu sendender Nachrichten von vornherein den Durchsatz einschränkt. Zum anderen werden aufgrund der Tatsache, daß die jeweils freien Speicherplätze während des Betriebs bekannt sind, deutlich weniger Reserven an Speicherplatz für den Hochlastfall oder einen kurzzeitigen Ausfall benötigt.

Vorteilhaft erfolgt die notwendige Signalisierung mit Hilfe von Protokollelementen, die so gewählt werden, daß eine ungestörte Kommunikation auch dann erfolgen kann, wenn einzelne Instanzen das erfindungsgemäße Verfahren nicht implementiert haben.

Im folgenden wird die Erfindung als Ausführungsbeispiel anhand von 3 Figuren näher erläutert.
Figur 1 zeigt schematisch einen Nachrichtenfluß zwischen zwei Sendeempfängern beim Aufbau einer SCTP-Assoziation,
Figur 2 zeigt schematisch die Abläufe im Empfängerteil eines Sendeempfängers, und
Figur 3 zeigt schematisch die Abläufe im Senderteil eines Sendeempfängers.

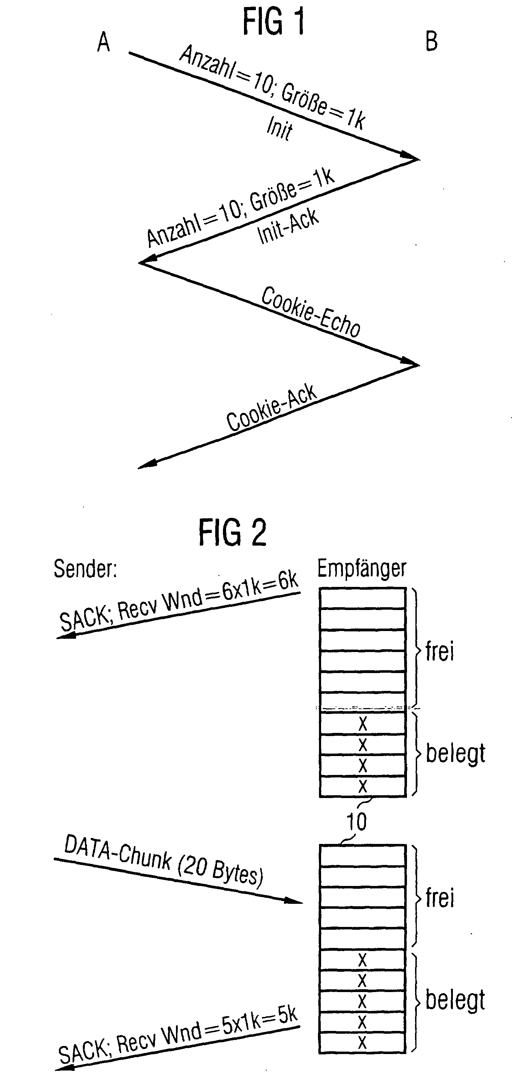

Die Erfindung wird im folgenden beispielhaft mit Bezug auf das Stream Control Transmission Protocol SCTP (IETF RFC 2960) erläutert. Zwischen zwei Sendeempfängern A und B wird eine SCTP Assoziation aufgebaut, wie in Figur 1 dargestellt. Dabei zeigt Figur 1 lediglich die erfindungsgemäße Erweiterung des ansonsten standardgemäß verlaufenden Aufbaus der SCTP Assoziation. Durch einen ersten Sendeempfänger A wird eine Assoziation durch das Senden eines INIT-Chunks an einen zweiten Sendeempfänger B initiiert. Mit dem INIT-Chunk werden die Parameter "Anzahl" mit einem beispielhaften Wert von 10 und "Größe" mit einem beispielhaften Wert von 1k entsprechend 1 kbyte übertragen. Dabei bedeutet der Parameter "Anzahl" die Anzahl der Speicherplätze im Empfängerteil des ersten Sendeempfängers A und der Wert "Größe" die Größe jeweils eines dieser Speicherplätze, wobei alle Speicherplätze bevorzugt die gleiche Größe aufweisen.

In einer Alternative können Speicherplätze verschiedener Größen vorgesehen werden, wobei dann die Größe der einzelnen Speicherplätze getrennt übermittelt wird. Da die Anzahl der Speicherplätze der Empfängerteile in der Praxis gering ist, stellt die getrennte Übermittlung verschiedener Größen der Speicherplätze keine besonderen Anforderungen und kann zweckmäßig beispielsweise im genannten INIT-Chunk erfolgen.

Der vom zweiten Sendeempfänger B empfangene INIT-Chunk wird ausgewertet, die enthaltenen Parameter werden in einem geeigneten Speicher des zweiten Sendeempfängers B vermerkt, und ein INIT-ACK-Chunk wird an den ersten Sendeempfänger A gesendet. Dieser INIT-ACK-Chunk enthält für den zweiten Sendeempfänger B die Parameter "Anzahl", wiederum mit einem beispielhaften Wert von 10, und "Größe", wieder mit einem beispielhaften Wert von 1k. Dabei repräsentiert der Parameter "Anzahl" die Anzahl der Speicherplätze im Empfängerteil des zweiten Sendeempfängers B und der Wert "Größe" die Größe jeweils eines dieser Speicherplätze. Alle Speicherplätze sind bevorzugt von gleicher Größe, können aber auch, wie bereits erwähnt, verschiedene Größen aufweisen.

Nach dem INIT-ACK-Chunk werden zwischen den beiden Sendeempfängern die COOKIE-ECHO und COOKIE-ACK-Chunks ausgetauscht.

In Figur 2 ist eine Situation während des laufenden Betriebs der SCTP Assoziation zwischen dem ersten Sendeempfänger A und dem zweiten Sendeempfänger B gezeigt. Dabei ist vereinfachend nur der Sendeteil (Sender) des ersten Sendeempfängers A und der Empfängerteil (Empfänger) des zweiten Sendeempfängers B dargestellt. Für den Empfänger ist eine einspaltige Speichermatrix 10 dargestellt, die beispielhaft aus zehn Speicherplätzen gebildet wird. Die Organisation dieser Speichermatrix ist für die vorliegende Erfindung ohne Belang. Für das vorliegende Beispiel seien 4 Speicherplätze belegt, was durch ein "x" im entsprechenden Speicherplatz angedeutet wird. 6 Speicherplätze seien frei; die Größe eines jeden Speicherplatz betrage 1k.

Zu Beginn des in Figur 2 dargestellten Message Flows wird ein SACK-Chunk (für: selective acknowledgement) vom Empfänger an den Sender gesendet, der als Parameter die Größe des Empfangsfensters RecvWnd enthält. Die Größe des Empfangsfensters ergibt sich aus der Multiplikation der Anzahl der freien Speicherplätze mit der Größe der Speicherplätze, hier also 6 x 1k ergibt 6k. Diese Berechnung wird im Empfänger vorgenommen, und an den Sender wird als Ergebnis der Parameter RecvWnd mit dem Wert 6k übertragen.

Wird nun vom Sender an den Empfänger ein DATA-Chunk mit einer Nutzinformation von 20 Byte übertragen, wobei diese Nutzinformation in der Speichermatrix 10 hinterlegt wird, stehen nunmehr für den weiteren Empfang von Nachrichten im Empfänger noch 5 Speicherplätze zur Verfügung. Dies wird mittels eines weiteren SACK-Chunks signalisiert, welcher den Parameter RecvWind mit dem Wert 5k aufweist. Die Berechnung dieses Wertes erfolgt wie oben beschrieben.

Im beschriebenen Beispiel würde bei Verwendung des herkömmlichen Verfahrens vom Empfänger an den Sender anstelle des Wertes 5k (5 Speicherplätze zu je 1k) der Wert 6k minus 20 Byte signalisiert werden, da die Flußkontrolle byteorientiert und nicht nachrichtenorientiert arbeitet. Im Ausführungsbeispiel der Erfindung hingegen wird die Flußkontrolle verwendet, um die Anzahl der durch den Empfänger noch akzeptierbaren Nachrichten zu signalisieren.

Der Sender, der die SACK-Chunks mit dem Parameter RecvWnd empfängt, berechnet aus dem Wert dieses Parameters und der beim Aufbau der Assoziation übermittelten Größe eines Speicherplatzes beim Empfänger die Anzahl der Nachrichten, die noch unquittiert gesendet werden kann.

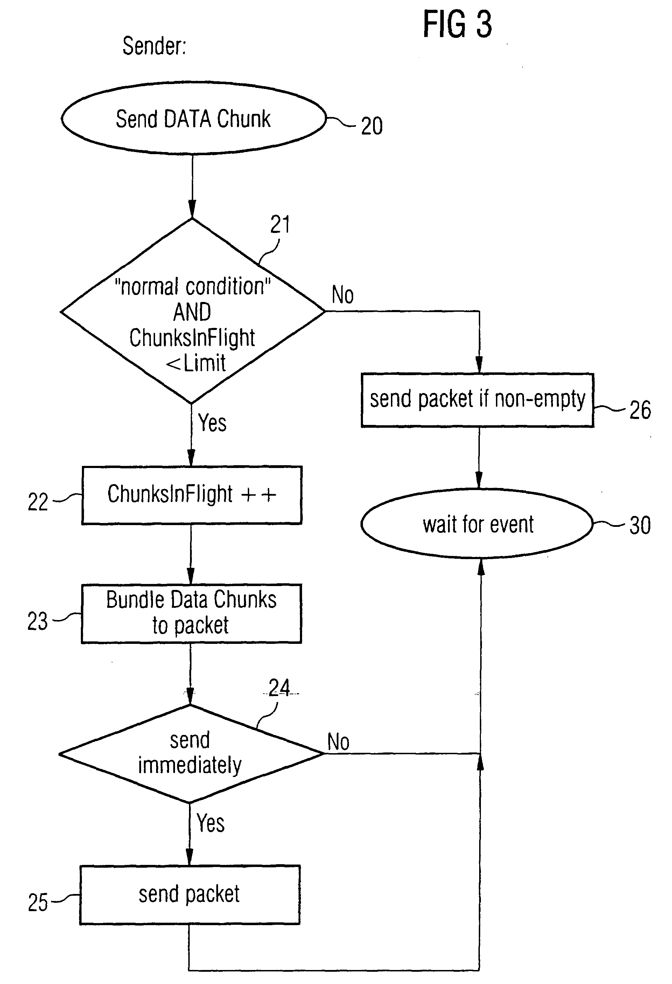

Mit Bezug auf Figur 3 wird nun ein vorteilhaftes Senderverhalten beschrieben. Zum Senden eines DATA-Chunks, Block 20, erfolgt zunächst eine Abfrage, ob der "normale Zustand" vorliegt und gleichzeitig der Parameter "ChunksInFlight" kleiner als das Limit ist, Block 21. Dabei ist "normaler Zustand" eine vereinfachende Zusammenfassung aller Bedingungen, unter denen ein Sender, der die erfindungsgemäße Erweiterung nicht aufweist, das Senden eines DATA-Chunks ausführt. Für den erfindungsgemäßen Sender ist zudem die Bedingung "ChunksInFlight" < Limit zu erfüllen.

Ist die Abfrage 21 nicht erfüllt, wird das Paket gesendet, falls es nicht leer ist, Block 26, und der Sender geht in einen Wartezustand über, Block 30. In diesem Wartezustand wartet der Sender beispielsweise auf weitere zu sendende DATA-Chunks 20.

Ist die Abfrage 21 hingegen erfüllt, wird zunächst der Parameter "ChunksInFlight" inkrementiert, Block 22, und anschließend werden die bereits vorhandenen Chunks und der neue Chunk zu Paketen gebündelt, Block 23. Dann wird bestimmt, ob dieses Paket sofort gesendet werden soll, Block 24. Ist dies der Fall, so wird das Paket gesendet, Block 25, und der Sender geht in den Wartezustand 30 über. Ist die Abfrage 24 nicht erfüllt, geht der Sender direkt in den Wartezustand 30 über.

Das Senden erfolgt dabei unter Berücksichtigung der Flußkontrolle, deren Begrenzung am Wert des empfangenen RecvWnd orientiert ist.

Um beispielsweise während einer Umstellungsphase im Netz die ungestörte Nachrichtenübermittlung zu gewährleisten, werden die Parameter-Tags der beim Aufbau der SCTP Assoziation übermittelten Parameter so gewählt, daß der jeweilige Sender dieser Parameter informiert wird, wenn der jeweilige Empfänger diese Parameter nicht verarbeiten kann, und daß dennoch die Assoziation aufgebaut wird. Damit wird gewährleistet, daß Instanzen, die die erfindungsgemäße Erweiterung aufweisen, mit Instanzen kommunizieren können, die die erfindungsgemäße Erweiterung nicht aufweisen.

Für das Protokoll SCTP ist eine Übermittlung des Parameters repräsentativ für das Vorhandensein der nachrichtenorientierten Speicherverwaltung beim Empfänger nicht erforderlich, da dies im allgemeinen bereits durch das verwendete Protokoll SCTP auf beiden Seiten einer SCTP Assoziation bekannt ist.

In einer Ausgestaltung kann die Übermittlung des Parameters repräsentativ für das Vorhandensein der nachrichtenorientierten Speicherverwaltung beim Empfänger implizit erfolgen, d.h. durch das Übertragen der Parameter "Größe" und "Anzahl" wird gleichzeitig signalisiert, daß eine nachrichtenorientierte Speicherverwaltung vorliegt.

Gemäß einer Weiterbildung der Erfindung kann die Vorgabe der Parameter "Anzahl" und "Größe" administrativ für alle oder ausgewählte Elemente erfolgen, wobei dann eine Übertragung dieser Parameter beim Aufbau der SCTP Assoziation nicht erforderlich ist.

Obwohl die Erfindung mit Bezug auf das Stream Control Transmission Protocol SCTP beschrieben wurde, ist das erfindungsgemäße Verfahren auch auf andere Protokolle anwendbar, bei denen die Speicherverwaltung nachrichtenorientiert und die Flußkontrolle an einer Anzahl von Informationseinheiten orientiert ist. Dabei ist die Erfindung nicht auf Kommunikationsnetze beschränkt, sondern kann im Zusammenhang mit Verbindungen beispielsweise zwischen Prozessoren und/oder anderen Bausteinen eingesetzt werden.

## Patentansprüche

1. Verfahren zur Nachrichtenübertragung zwischen einem Sender und einem Empfänger, wobei der Empfänger eine nachrichtenorientierte Speicherverwaltung aufweist und wobei ein Transportprotokoll zwischen Sender und Empfänger eine Flußkontrolle aufweist, die an der Anzahl von Informationseinheiten orientiert ist,
wobei,
- für den Sender zumindest einer der folgenden Parameter bestimmt wird: Parameter repräsentativ für das Vorhandensein der nachrichtenorientierten Speicherverwaltung beim Empfänger; Anzahl beim Empfänger vorhandener Speicherplätze für Nachrichten; Größe jeweils eines der beim Empfänger vorhandenen Speicherplätze für Nachrichten ausgedrückt in Informationseinheiten,
**dadurch gekennzeichnet,**
- **daß** zeitgesteuert oder ereignisgesteuert vom Empfänger an den Sender die Anzahl der noch erlaubten Informationseinheiten übermittelt wird, wobei der Empfänger diese Anzahl anhand der Zahl empfangener Nachrichten oder noch freier Speicherplätze für Nachrichten ermittelt, und
- **daß** durch den Sender aus der übermittelten Anzahl noch erlaubter Informationseinheiten die Anzahl noch an den Empfänger übermittelbarer Nachrichten ermittelt wird.

2. Verfahren nach Anspruch 1,
**dadurch gekennzeichnet,**
**daß** die Bestimmung des Parameters oder der Parameter für den Sender mittels administrativer Vorgaben vorgenommen wird.

3. Verfahren nach Anspruch 1,
**dadurch gekennzeichnet,**
**daß** die Bestimmung des Parameters oder der Parameter für den Sender mittels vom Empfänger signalisierter Vorgaben vorgenommen wird.

4. Verfahren nach einem der Ansprüche 1 bis 3,
**dadurch gekennzeichnet,**
**daß** die Informationseinheiten Bytes sind und die Flußkontrolle des Transportprotokolls byteorientiert ist.

5. Verfahren nach Anspruch 4,
**dadurch gekennzeichnet,**
**daß** das Transportprotokoll das Stream Control Transmission Protocol SCTP ist.

6. Protokollmaschine mit einer Empfangsvorrichtung und mit einer Sendevorrichtung, wobei die Empfangsvorrichtung eine nachrichtenorientierte Speicherverwaltung aufweist und wobei ein von Sende- und Empfangsvorrichtung unterstütztes Transportprotokoll eine Flußkontrolle aufweist, die an der Anzahl von Informationseinheiten orientiert ist,
wobei,
- die Sendevorrichtung Mittel zum Ermitteln zumindest eines der folgenden Parameter aufweist: Parameter repräsentativ für das Vorhandensein der nachrichtenorientierten Speicherverwaltung bei einer Empfangsvorrichtung einer weiteren Protokollmaschine, die mit der Protokollmaschine verbunden ist; Anzahl der bei der Empfangsvorrichtung der weiteren Protokollmaschine vorhandenen Speicherplätze für Nachrichten; Größe jeweils eines der bei der Empfangsvorrichtung vorhandenen Speicherplätze für Nachrichten, ausgedrückt in Informationseinheiten,
**dadurch gekennzeichnet,**
- **daß** die Empfangsvorrichtung Mittel aufweist zum zeitgesteuerten oder ereignisgesteuerten Senden an eine Sendevorrichtung einer weiteren Protokollmaschine der Anzahl der noch erlaubten Informationseinheiten, wobei die Empfangsvorrichtung diese Anzahl anhand der Zahl empfangener Nachrichten oder noch freier Speicherplätze für Nachrichten ermittelt, und
- **daß** die Sendevorrichtung Mittel zum Ermitteln der Anzahl noch sendbarer Nachrichten aus einer von der Empfangsvorrichtung der weiteren Protokollmaschine empfangenen Anzahl erlaubter Informationseinheiten aufweist.

7. Protokollmaschine nach Anspruch 6,
**dadurch gekennzeichnet,**
**daß** die Protokollmaschine Mittel zur Festlegung administrativer Vorgaben für den Parameters oder die Parameter für die Sendevorrichtung aufweist.

8. Protokollmaschine nach Anspruch 6,
**dadurch gekennzeichnet,**
**daß** die Protokollmaschine Mittel zur Festlegung von der weiteren Empfangsvorrichtung signalisierter Vorgaben für den Parameters oder die Parameter für die Sendevorrichtung aufweist.

9. Protokollmaschine nach einem der Ansprüche 6 bis 8,
**dadurch gekennzeichnet,**
**daß** die Informationseinheiten Bytes sind und die Protokollmaschine eine Flußkontrolle des Transportprotokolls aufweist, die byteorientiert ist.

10. Protokollmaschine nach Anspruch 9,
**dadurch gekennzeichnet,**
**daß** das Transportprotokoll das Stream Control Transmission Protocol SCTP ist.

## Claims

1. Method for transmitting messages between a transmitter and a receiver, whereby the receiver has a message-oriented storage management and whereby a transport protocol between transmitter and receiver has a flow control mechanism which is oriented toward the number of information units,
wherein
- at least one of the following parameters is determined for the transmitter: parameter representative of the presence of the message-oriented storage management at the receiver; number of storage locations for messages present at the receiver; size in each case of one of the storage locations for messages present at the receiver, expressed in information units,
**characterized in that**
- the number of information units still permitted is transmitted on a time-controlled or event-driven basis from the receiver to the transmitter, whereby the receiver determines this number on the basis of the number of received messages or storage locations still free for messages, and
- the number of messages which can still be transmitted to the receiver is determined by the transmitter from the transmitted number of still permitted information units.

2. Method according to Claim 1,
**characterized in that**
the parameter or parameters for the transmitter is or are determined by means of administrative specifications.

3. Method according to Claim 1,
**characterized in that**
the parameter or parameters for the transmitter is or are determined by means of specifications signalled by the receiver.

4. Method according to one of Claims 1 to 3,
**characterized in that**
the information units are bytes and the flow control mechanism of the transport protocol is byte-oriented.

5. Method according to Claim 4,
**characterized in that**
the transport protocol is the Stream Control Transmission Protocol SCTP.

6. Protocol engine having a receiving device and a transmitting device, whereby the receiving device has a message-oriented storage management and whereby a transport protocol supported by transmitting and receiving device has a flow control mechanism which is oriented toward the number of information units,
wherein
- the transmitting device has means for determining at least one of the following parameters: parameter representative of the presence of the message-oriented storage management at a receiving device of a further protocol engine which is connected to the protocol engine; number of storage locations for messages present at the receiving device of the further protocol engine; size in each case of one of the storage locations for messages present at the receiving device, expressed in information units,
**characterized in that**
- the receiving device has means for time-controlled or event-driven transmission, to a transmitting device of a further protocol engine, of the number of still permitted information units, whereby the receiving device determines this number on the basis of the number of received messages or storage locations still free for messages, and
- the transmitting device has means for determining the number of messages which can still be transmitted from a number of permitted information units received by the receiving device of the further protocol engine.

7. Protocol engine according to Claim 6,
**characterized in that**
the protocol engine has means for determining administrative specifications for the parameter or parameters for the transmitting device.

8. Protocol engine according to Claim 6,
**characterized in that**
the protocol engine has means for determining specifications signalled by the further receiving device for the parameter or parameters for the transmitting device.

9. Protocol engine according to one of Claims 6 to 8,
**characterized in that**
the information units are bytes and the protocol engine has a flow control mechanism of the transport protocol which is byte-oriented.

10. Protocol engine according to Claim 9,
**characterized in that**
the transport protocol is the Stream Control Transmission Protocol SCTP.

## Revendications

1. Procédé pour la transmission de messages entre un émetteur et un récepteur, le récepteur présentant une gestion de mémoire orientée messages et un protocole de transport entre l'émetteur et le récepteur présentant un contrôle de flux qui est orienté sur le nombre d'unités d'information,
moyennant quoi
- au moins l'un des paramètres suivants est déterminé pour le receveur: paramètre représentatif de la présence de la gestion de mémoire orientée message chez le récepteur ; nombre d'emplacements mémoire pour les messages présents chez le récepteur; grandeur de respectivement l'un des emplacements mémoire pour les messages présents chez le récepteur, exprimée en unités d'information,
**caractérisé en ce que**
- le nombre des unités d'information encore admissibles est transmis du récepteur à l'émetteur de façon contrôlée au niveau du temps ou de l'événement, le récepteur déterminant ce nombre à l'aide du nombre de messages reçus ou d'emplacements mémoire pour les messages encore libres, et
- **en ce que** le nombre de messages pouvant être transmis encore au récepteur est déterminé par l'émetteur à partir du nombre transmis d'unités d'information encore admissibles.

2. Procédé selon la revendication 1,
**caractérisé en ce que**
la détermination du paramètre ou des paramètres pour l'émetteur est effectuée au moyen de spécifications administratives.

3. Procédé selon la revendication 1,
**caractérisé en ce que**
la détermination du paramètre ou des paramètres pour le récepteur est effectuée au moyen de spécifications signalées par le récepteur.

4. Procédé selon l'une quelconque des revendications 1 à 3
**caractérisé en ce que**
les unités d'information sont des bytes et le contrôle de flux du protocole de transport est orienté bytes.

5. Procédé selon la revendication 4,
**caractérisé en ce que** le protocole de transport est le Stream Control Transmission Protocole SCTP.

6. Machine de protocole avec un dispositif de réception et avec un dispositif d'émission, le dispositif de réception présentant une gestion mémoire orientée messages et un protocole de transport supporté par le dispositif d'émission et de réception présentant un contrôle de flux qui est orienté sur le nombre d'unités d'information,
moyennant quoi
- le dispositif d'émission présente des moyens pour déterminer au moins l'un des paramètres suivants : paramètre représentatif de la présence de la gestion de mémoire orientée informations sur un dispositif de réception d'une autre machine de protocole, qui est relié à la machine de protocole ; nombre des emplacements mémoire pour les messages présents sur le dispositif de réception de l'autre machine de protocole; taille respectivement de l'un des emplacements mémoire pour les messages présents sur le dispositif de réception, exprimée en unités d'information,
**caractérisée en ce que**,
- le dispositif de réception présente des moyens pour l'envoi contrôlé au niveau du temps ou de l'événement à un dispositif d'émission d'une autre machine de protocole du nombre des unités d'information encore admissibles, le dispositif de réception déterminant ce nombre à l'aide du nombre de messages reçus ou d'emplacements mémoire encore libres pour des messages, et
- **en ce que** le dispositif d'émission présente des moyens pour déterminer le nombre de messages pouvant être encore envoyés à partir d'un nombre d'unités d'information admissibles reçu par le dispositif de réception de l'autre machine de protocole.

7. Machine de protocole selon la revendication 6,
**caractérisée en ce que**
la machine de protocole présente des moyens pour la définition de spécifications administratives pour le paramètre ou pour les paramètres pour le dispositif d'émission.

8. Machine de protocole selon la revendication 6,
**caractérisée en ce que**
la machine de protocole présente des moyens pour la définition de spécifications signalisées par l'autre dispositif de réception pour le paramètre ou les paramètres pour le dispositif d'émission.

9. Machine de protocole selon l'une quelconque des revendications 6 à 8,
**caractérisée en ce que**
les unités d'information sont des bytes et la machine de protocole présente un contrôle de flux du protocole de transport qui est orienté bytes.

10. Machine de protocole selon la revendication 9,
**caractérisée en ce que**
le protocole de transport est le Stream Control Transmission Pcotocol SCTP.
